# EUROPEAN PATENT SPECIFICATION

(11) **EP 3 413 760 B1**
(45) Date of publication and mention of the grant of the patent: **21.10.2020**
(21) Application number: 17710794.3
(22) Date of filing: 08.02.2017
(51) Int. Cl.: A47F 7/00, A47B 51/00, A47B 63/00, G09B 21/00, A47B 19/00

(54) **HANDLING SYSTEM FOR THE MULTI-SENSORY FRUITION OF ARTWORKS**
HANDHABUNGSSYSTEM FÜR DIE MULTISENSORISCHE UMSETZUNG VON KUNSTWERKEN
SYSTÈME DE GESTION PERMETTANT LA RÉALISATION MULTI-SENSORIELLE D'OEUVRES

(30) Priority: 10.02.2016 IT UB20160618
(43) Date of publication of application: 19.12.2018
(73) Proprietor: T.E.A. SAS di Elena Console & C., 88100 Catanzaro (CZ) (IT)
(72) Inventor: CONSOLE, Elena, 88100 Catanzaro (CZ) (IT); BIANCO, Gianfranco, 87024 Fuscaldo (CS) (IT); PALAIA, Paolo, 88100 Catanzaro (CZ) (IT); CRISTOFARO, Stefano, 88100 Catanzaro (CZ) (IT); DONATO, Chiara, 88044 Mercellinara (CZ) (IT); CONSOLE, Mafalda, 88100 Catanzaro (CZ) (IT); TASSONE, Rosella, 88100 Catanzaro (CZ) (IT); CONSOLE, Francesca, 88100 Catanzaro (CZ) (IT)
(74) Representative: Giuliano, Natalia
(86) International application number: PCT/IB2017/050665
(87) International publication number: WO 2017/137892

(56) References cited:
- WO-A1-2011/067801
- BE-A- 640 115
- DE-A1- 4 321 359

## Description

The present invention relates to a handling system for the multi-sensory fruition of artworks.

In particular, the present invention relates to a handling system for the multi-sensorial fruition of artworks conceived in order to make available a set of artistic works through the reproduction and the combination of multiple stimuli, i.e. a multi-sensory fruition, mainly in special seats designed for users with disabilities.

As it is known, at present most of the museums or exhibition spaces are primarily usable through the sense of sight. For this reason, in the traditional exhibition spaces, the usability is limited or even prevented to people having partial or total disability of vision.

To overcome this problem special seats or tactile museums have been developed. In these places the user is allowed to touch the exhibited artwork. The results obtained from these systems, especially in the case of pictorial artworks, however, is limited when the user has visual disability. In fact, even if the shapes painted on a framework are somehow reproducible in relief and perceptible to the touch, the artwork is not usable as whole as a set of textures, lights and shadows.

Devices have been developed for multi-sensory fruition of artworks to recreate sounds or play video in order to complete the visual perception of the artwork.

For example, the patent application WO2011067801 describes a system for the fruition of multi-sensory artworks, intended in particular for users with disabilities. The described solution comprises a panel on which an artwork reproduction with relief is placed. Such reproduction is accompanied by means of detection of the position of the fingers on the artwork reproduction. The system further comprises devices for reproducing sound, odors, videos that are activated thanks to the detector of the position of the fingers, thus by means of the touch by the user to specific areas of the artistic reproduction.

Another similar system is disclosed in DE 43 21 359 A1. However, in the known solutions for the multi-sensorial fruition of the artworks by disabled or users in general, single special locations where the user can approach the work, or its reproduction, and perceive it through touch are provided. Although, in some cases, as in the patent application described before, the user can operate the reproduction of auditory, visual or tactile stimuli related to the artwork, each multisensory station always provides for the display and the fruition of a single artwork. This results in a consequent encumbrance of the museum hall or of the room used for the education and in more difficulties in the organization of exhibition itineraries.

Overall these problems and difficulties in the exhibition are particularly important when the exhibition space is intended exclusively or additionally for disabled users.

In fact, the user must move in correspondence of each station in order to benefit of the exposed artwork, and move between one station and another one. When the user has mobility or visual disabilities the itinerary is particularly difficult and problematic.

In the light of the above, it appears evident the need of finding a solution that enables to make available in a unique exposure station able to be used also by disabled users, a set of artistic works, selectable by the user, so as to be automatically positioned and physically accessible to the touch.

The object of the present invention is to provide a handling system for the multi-sensory fruition of artworks, which allows to reduce the encumbrance associated with individual multisensory stations, i.e. able to expose a single work, and to be physically and simply accessible to the touch, therefore, having characteristics such as to overcome the limitations which still affect the previously described system with reference to the known technique.

According to the present invention, a handling system for the multi-sensory fruition of artworks, as defined in claim 1.

For a better understanding of the present invention is now described a preferred embodiment, purely by way of nonlimiting example, with reference to annexed drawings, in which:
- Figure 1 shows a perspective view of a handling system for the multi-sensory fruition of artworks, according to the invention;
- Figure 2 shows a detailed perspective view of a loading unit of artworks of the handling system for the multi-sensorial fruition of artworks, according to the invention;
- Figure 3 shows an enlarged perspective view of a group of vertical translation of artworks of the handling system for the use of multi-sensory artworks, according to the invention;
- Figure 4 shows a perspective view of the vertical translation group with an artwork in a loading / unloading position on / from a bookstand of the handling system for the use of multi-sensory artworks, according to the invention;
- Figure 5 shows a side perspective view of a boosting unit connected to the vertical translation group of handling system for the use of multi-sensory artworks, according to the invention;
- Figure 6 shows a side perspective view of the handling system for the use of multi-sensory artworks with an artwork placed on the bookstand, according to the invention.

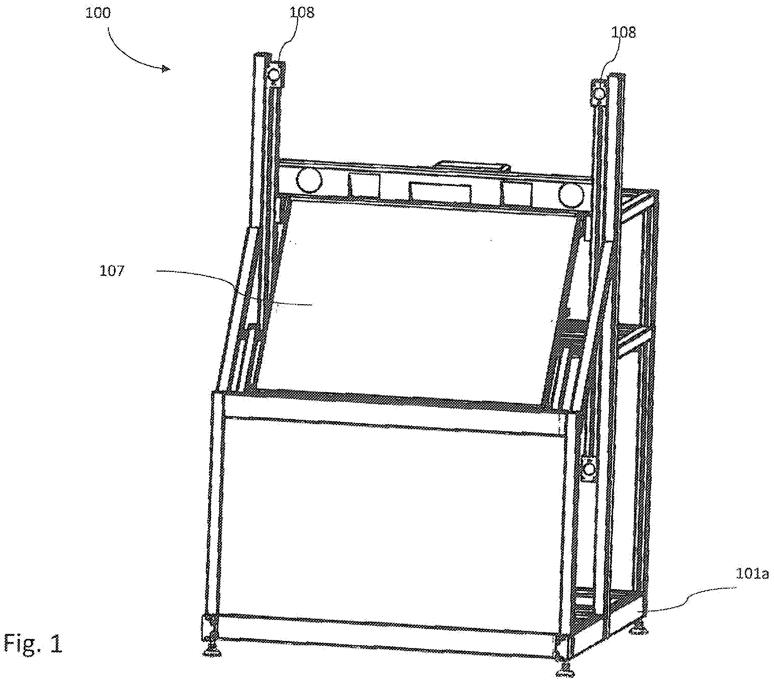

With reference to Figure 1, the handling system 100 for the use of multi-sensory artworks is shown, according to the invention.

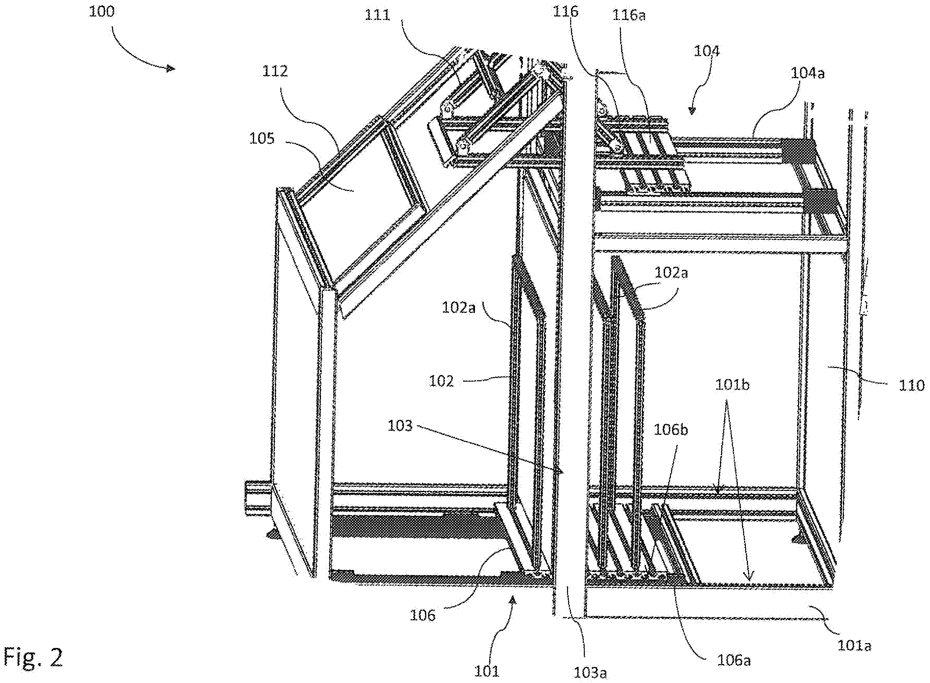

In particular, with reference to Figure 2, the handling system 100 comprises a horizontal translation group 101 of artworks, a loading unit 102 of the artworks able to slide thanks to the horizontal translation group 101, a vertical translation group 103 of the artworks connected to the horizontal translation group 101, a boosting unit 104 of the artworks and a bookstand 105.

More in detail, the horizontal translation group 101 comprises a pair of horizontal elements 101a internally equipped with rail tracks 101b between which a carriage 106 is able to slide. The carriage 106 is substantially constituted by a base 106a provided with recesses 106b in which support elements 102a of a support rack which substantially constitutes the loading unit 102 are inserted. Therefore, since the rack 102 is integral with the carriage 106, it is also able to slide along the rail tracks 101b of the horizontal translation group 101.

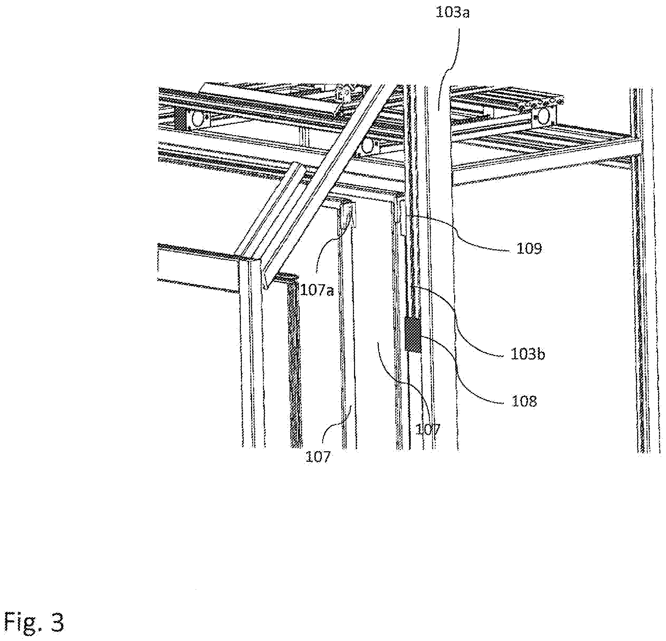

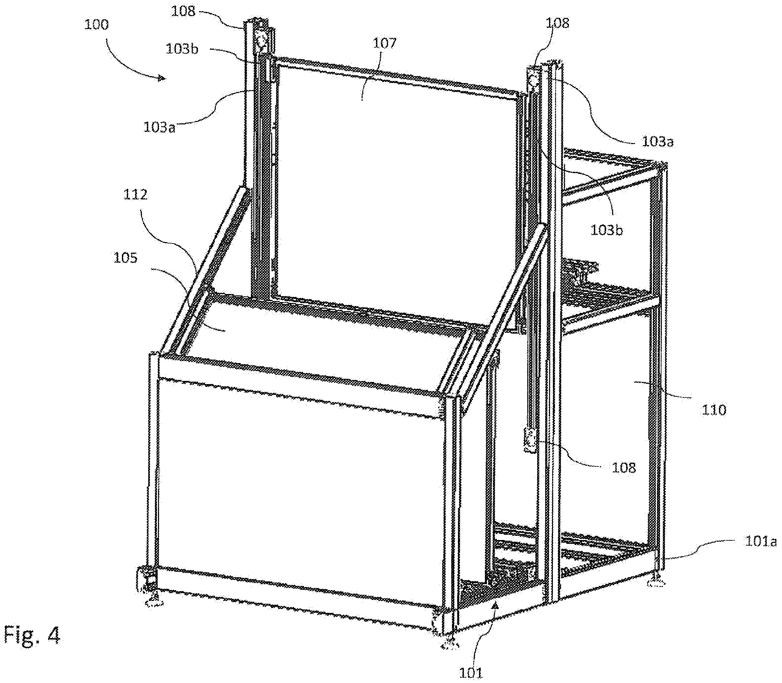

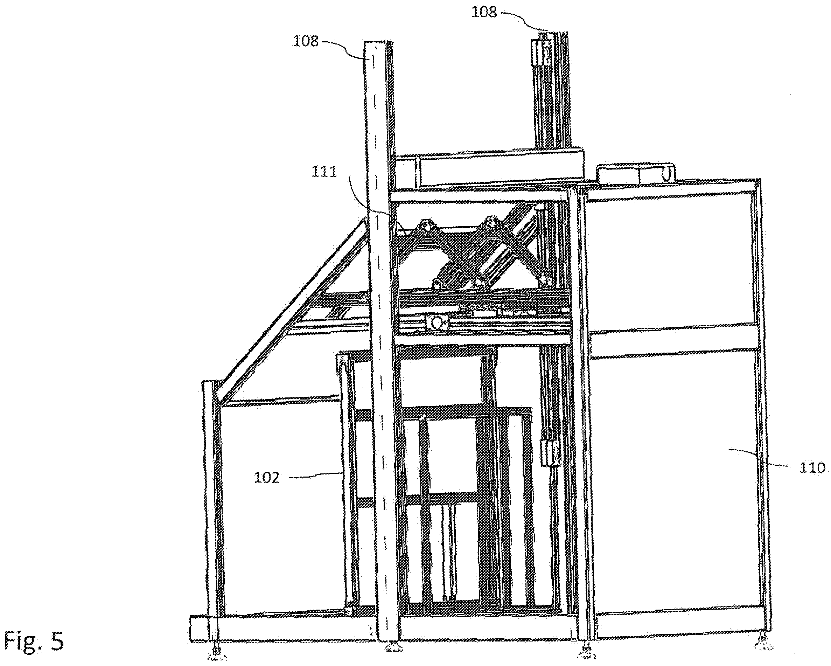

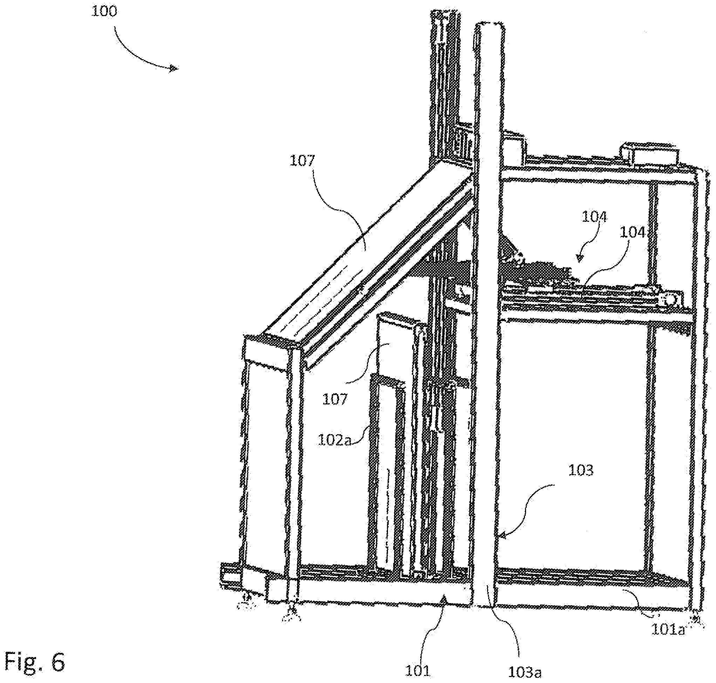

As shown in figures 2-6, each support element 102a of the support rack 102 is configured to house an artwork 107, for example a paint, selectable by the user through a dedicated control device, such as a button 108, so as to be automatically handled by the system 100 to be at the end exposed on the bookstand 105.

More in detail, as shown in figures 2-4, the vertical translation group 103 comprises first vertical fixed support elements 103a connected perpendicularly and second vertical movable support elements 103b able to slide vertically along the fixed vertical support elements 103a.

According to an aspect of the invention, the second vertical movable support elements 103b able to slide have selection buttons 108 at their ends.

Furthermore, according to another aspect of the invention, the second vertical movable support elements 103b able to slide of the vertical translation group 103 comprise, each internally, a coupling element, for example a pin 109, configured to engage a slot 107a positioned at the upper end of the lateral edge of each artwork 107.

According to another aspect of the invention, the boosting unit 104 of the system 100 is connected between the vertical translation group 103 and a rear wall 110 of the system 100 and is positioned at a height correspondent to a loading / unloading position at which the artwork 107 selected is lifted. The boosting unit 104 comprises a pair of horizontal guide elements 104a between a carriage 106 is able to slide, substantially constituted by a base 116a on which a system of pistons 111 configured to push horizontally the artwork is mounted.

At this point the artwork 107 is positioned on the bookstand 105 in a position physically accessible by a user.

Advantageously, the lower part of the handling system 100 presents conformation, height and width such as to allow a user with limited mobility to get closer with the wheelchair.

According to one aspect of the invention, the handling system 100 may include one or more audio playback devices, not shown in the figures.

According to another aspect of the invention, the handling system 100 may include olfactory devices and / or devices for visual reproducing images and / or videos, not shown in the figures. In particular, according to an aspect of the invention, said devices are able to be controlled by means of an electronic processor.

According to another aspect of the invention, the handling system 100 may include activation buttons or sensors that trigger audio playback, video playback and / or reproduction of olfactory stimuli. Advantageously according to the invention, such sensors and buttons are accessible by the user who may operate it by means of touch or a voice command.

According to another aspect of the invention the handling system may also include captions, to print characters and / or Braille characters.

According to another aspect of the invention, the artwork handled by the handling system according to the invention is a reproduction of an artwork which consists of a panel on which the work is played by means of samples of materials and / or embossed elements that constitute a so-called "touch panel".

According to a further aspect of the invention the artwork 107 comprises sensors that detect the user's finger position on the surface of the same artwork and based on the detected position enable devices emitting an acoustic, thermal, vibration, visual or olfactory signal. Those devices can be integrated into the surface of the artwork or placed in special housings of the handling system for the multi-sensory fruition of artworks.

In use, the selection button of an artwork 107, from among those available, by means of at least one of buttons 108, allows the operation of the horizontal translation group 101, on which the vertical translation group 103 is able to slide. The carriage 106 slides along the track rails 101b and stop when the selected artwork 107 has reached a position of loading / unloading in correspondence of the vertical support elements 103a of the vertical translation group 103. Once the pin 109 of each of the vertical movable support element 103b has hooked the slot 107a, the artwork 107 is moved vertically and lifted to be free of obstacles positioned in such a way as to be arranged on the bookstand 105. At this point the boosting unit 104 pushes horizontally the artwork and simultaneously the second vertical movable elements 103b of the vertical translation group are lowered to a height corresponding to the position of possible coupling of the artwork 107 in support guides 112 of the bookstand 105.

Therefore, the handling system for the multi-sensory fruition of artworks according to the invention allows to reduce the size of the individual artworks exposure stations.

In addition, the handling system for the multi-sensory fruition of artworks according to the invention and consent to a user, in particular to a disabled user, to be able to enjoy the artworks without having to move along a display path.

Another advantage of the handling system for the multi-sensory fruition of artworks according to the invention is to allow the user to select the artwork of his interest, to move and position the artwork automatically selected.

Another advantage of the handling system for the multi-sensory fruition of artworks according to the invention is to allow to expose the artwork so as to be accessible to the touch and sight and operate multisensory devices able to reproduce visual, auditory, olfactory and tactile stimuli.

In addition, the handling system for the multi-sensory fruition of artworks according to the invention allows a user to choose an artwork within a proposed group and to be able to benefit both from the view and the touch, the hearing and the smell.

In addition, the handling system for the multi-sensory fruition of artworks according to the invention allows to reproduce and transmit multiple stimuli multisensory able to illustrate an artistic work, wherein said system can be realized and operated with low costs.

Finally, the handling system for the multi-sensory fruition of artworks according to the invention is simple, safe and reliable.

Clearly, it is apparent that the handling system for the multi-sensory fruition of artworks here described may be subject to modifications and variations without thereby departing from the protective scope of the present invention, as defined in the appended claims.

## Claims

1. Handling system (100) for the multisensory fruition of at least an artwork (107) comprising:
- at least a bookstand (105) for said at least one artwork (107);
- at least one horizontal translation group (101) of said at least one artwork (107);
- at least one vertical translation group (103) of said at least one artwork (107) connected to the horizontal translation group (101) and configured to lift said at least one artwork (107) in a position of loading/unloading said at least one artwork (107) on said at least on bookstand (105);
- at least a loading unit (102) of said at least one artwork (107) connected to said at least one horizontal translation group (101) and able to slide on it up to a position corresponding to said at least one vertical translation group (103);
**characterized in that** said at least one vertical translation group (103) comprises first vertical fixed support elements (103a) connected perpendicularly to said at least one horizontal translation group (101) and second vertical movable support elements (103b) able to vertically slide along said vertical fixed support elements (103a), said second vertical movable support elements (103b) comprising at least one coupling element (109) configured to engage at least one slot (107a) positioned at an upper end of the lateral edge of said artwork (107).

2. Handling system (100) for the multisensory fruition of at least an artwork (107) according to claim 1, **characterized in** comprising at least one boosting unit (104) of said at least one artwork (107) connected between said at least one vertical translation group (103) and a rear wall (110) of the handling system (100) and positioned at the height of the bookstand (105) corresponding to said position of loading/unloading.

3. Handling system (100) for the multisensory fruition of at least an artwork (107) according to claim 2, **characterized in that** said boosting unit (104) comprises at least a pair of horizontal guiding elements (104a) and at least one carriage (116) able to slide between them and comprising at least a base (116a) on which a piston system (111) configured to push horizontally the artwork (107) on said bookstand (105) is mounted.

4. Handling system (100) for the multisensory fruition of at least an artwork (107) according to claim 1, **characterized in that** said at least one horizontal translation group (101) comprises at least a pair of horizontal elements (101a) internally equipped with rail-tracks (101b) and with at least one carriage (106) able to slide between the rail-tracks (101b).

5. Handling system (100) for the multisensory fruition of at least an artwork (107) according to claim 4, **characterized in that** said at least one carriage (106) comprises at least one base (106a) having at least one recess (106b).

6. Handling system (100) for the multisensory fruition of at least an artwork (107) according to claims 1 and 5, **characterized in that** said at least one loading unit (102) comprises at least one support rack provided with at least one support element (102a) configured to house at least an artwork (107) and being insertable in said at least one recess (106b), said at least one support rack being able to slide integrally with said carriage (106) along said rail-tracks (101b).

7. Handling system (100) for the multisensory fruition of at least an artwork (107) according to any of the preceding claims, **characterized in** comprising at least one dedicated control (108) configured to make said artwork (107) selectable by an user and to let said loading unit (102) slides on said vertical translation group (101) up to said position of loading/unloading, to lift said artwork (107) from said vertical translation group (103) up to the bookstand (105) height and to actuate the boosting unit (104) up to positioning of the artwork (107) on guides (112) of the bookstand (105).

8. Handling system (100) for the multisensory fruition of at least an artwork (107) according to any of the preceding claims, **characterized in** comprising at least one a device of the type:
- A sound playback device;
- an olfactory device;
- a device for visual reproduction of images and/or videos controllable by an electronic processor;
- activation sensors of sound playback, video reproduction and/or reproduction of olfactory stimuli.

9. System for the fruition of at least an artwork (107) comprising the handling system (100) according to claims 1-8, an artwork (107) to be displayed and sensors able to activate output devices emitting an acoustic, thermal, vibrational, visual or olfactory signal.

## Patentansprüche

1. Handhabungssystem (100) zur multisensorischen Wahrnehmung von mindestens einem Kunstwerk (107), umfassend:
- mindestens einen Bücherständer (105) für das mindestens eine Kunstwerk (107);
- mindestens eine Gruppe für die horizontale Translation (101) des mindestens einen Kunstwerks (107);
- mindestens eine Gruppe für die vertikale Translation (103) des mindestens einen Kunstwerks (107), die mit der Gruppe für die horizontale Translation (101) verbunden und so ausgelegt ist, dass sie das mindestens eine Kunstwerk (107) in eine Position zum Laden/Entladen des mindestens einen Kunstwerks (107) auf den/vom mindestens einen Bücherständer (105) anhebt;
- mindestens eine Ladeeinheit (102) des mindestens einen Kunstwerks (107), die mit der mindestens einen Gruppe für die horizontale Translation (101) verbunden und in der Lage ist, darauf bis zu einer Position zu gleiten, die der mindestens einen Gruppe für die vertikale Translation (103) entspricht,
**dadurch gekennzeichnet, dass** die mindestens eine Gruppe für die vertikale Translation (103) erste vertikale feste Stützelemente (103a) umfasst, die senkrecht mit der mindestens einen Gruppe für die horizontale Translation (101) verbunden sind, und zweite vertikale bewegliche Stützelemente (103b), die vertikal entlang der vertikalen festen Stützelemente (103a) gleiten können, wobei die zweiten vertikalen beweglichen Stützelemente (103b) mindestens ein Kupplungselement (109) umfassen, das so ausgelegt ist, dass es in mindestens eine Aussparung (107a) eingreift, die an einem oberen Ende der Seitenkante des Kunstwerks (107) positioniert ist.

2. Handhabungssystem (100) zur multisensorischen Wahrnehmung von mindestens einem Kunstwerk (107) nach Anspruch 1, **dadurch gekennzeichnet, dass** es mindestens eine Verstärkungseinheit (104) für das mindestens eine Kunstwerk (107) umfasst, die zwischen der mindestens einen Gruppe für die vertikale Translation (103) und einer Rückwand (110) des Handhabungssystems (100) verbunden und auf der Höhe des Bücherständers (105) entsprechend der Lade-/Entladeposition positioniert ist.

3. Handhabungssystem (100) zur multisensorischen Wahrnehmung von mindestens einem Kunstwerk (107) nach Anspruch 2, **dadurch gekennzeichnet, dass** die Verstärkungseinheit (104) mindestens ein Paar horizontale Führungselemente (104a) und mindestens einen Schlitten (116) umfasst, der zwischen diesen gleiten kann und mindestens eine Basis (116a) umfasst, auf der ein Kolbensystem (111) montiert ist, das so ausgelegt ist, dass es das Kunstwerk (107) horizontal auf dem Bücherständer (105) schiebt.

4. Handhabungssystem (100) zur multisensorischen Wahrnehmung von mindestens einem Kunstwerk (107) nach Anspruch 1, **dadurch gekennzeichnet, dass** die mindestens eine Gruppe für die horizontale Translation (101) mindestens ein Paar horizontaler Elemente (101a) umfasst, die innenseitig mit Schienenbahnen (101b) und mit mindestens einem Schlitten (106) ausgestattet sind, der zwischen den Schienenbahnen (101b) gleiten kann.

5. Handhabungssystem (100) zur multisensorischen Wahrnehmung von mindestens einem Kunstwerk (107) nach Anspruch 4, **dadurch gekennzeichnet, dass** der mindestens eine Schlitten (106) mindestens eine Basis (106a) mit mindestens einer Vertiefung (106b) aufweist.

6. Handhabungssystem (100) zur multisensorischen Wahrnehmung von mindestens einem Kunstwerk (107) nach Anspruch 1 und 5, **dadurch gekennzeichnet, dass** die mindestens eine Ladeeinheit (102) mindestens ein Trägergestell umfasst, das mit mindestens einem Trägerelement (102a) versehen ist, das so ausgelegt ist, dass es mindestens ein Kunstwerk (107) aufnimmt und in die mindestens eine Vertiefung (106b) einführbar ist, wobei das mindestens eine Trägergestell in der Lage ist, fest verbunden mit dem Schlitten (106) entlang der Schienenbahnen (101b) zu gleiten.

7. Handhabungssystem (100) zur multisensorischen Wahrnehmung von mindestens einem Kunstwerk (107) nach einem der vorhergehenden Ansprüche, **dadurch gekennzeichnet, dass** es mindestens eine dedizierte Steuerung (108) umfasst, die so ausgelegt ist, dass sie das Kunstwerk (107) durch einen Benutzer auswählbar macht und die Ladeeinheit (102) auf der Gruppe für die vertikale Translation (101) bis zur Lade-/Entladeposition gleiten lässt, um das Kunstwerk (107) von der Gruppe für die vertikale Translation (103) auf die Höhe des Bücherständers (105) zu heben und die Verstärkungseinheit (104) bis zur Positionierung des Kunstwerks (107) auf Führungen (112) des Bücherstands (105) zu betätigen.

8. Handhabungssystem (100) zur multisensorischen Wahrnehmung von mindestens einem Kunstwerk (107) nach einem der vorhergehenden Ansprüche, **dadurch gekennzeichnet, dass** es mindestens eine Vorrichtung des folgenden Typs umfasst:
- ein Tonwiedergabegerät;
- eine olfaktorische Vorrichtung;
- eine Vorrichtung zur visuellen Wiedergabe von Bildern und/oder Videos, die durch einen elektronischen Prozessor steuerbar ist;
- Aktivierungssensoren der Tonwiedergabe, der Videowiedergabe und/oder der Wiedergabe von Geruchsreizen.

9. System zur Wahrnehmung von mindestens einem Kunstwerk (107), umfassend das Handhabungssystem (100) nach Anspruch 1 bis 8, ein auszustellendes Kunstwerk (107) und Sensoren, die in der Lage sind, Ausgabevorrichtungen zu aktivieren, die ein akustisches, thermisches, vibrierendes, visuelles oder olfaktorisches Signal aussenden.

## Revendications

1. Système de manipulation (100) destiné à la réalisation multisensorielle d'au moins un ouvrage d'art (107) comprenant :
au moins un porte-livre (105) pour ladite au moins un ouvrage d'art (107) ;
au moins un groupe de translation horizontale (101) de ladite au moins un ouvrage d'art (107) ;
au moins un groupe de translation verticale (103) de ladite au moins un ouvrage d'art (107) raccordé au groupe de translation horizontale (101) et conçu pour soulever ladite au moins un ouvrage d'art (107) dans une position de chargement/déchargement de ladite au moins un ouvrage d'art (107) sur ledit au moins un porte-livre (105) ;
au moins une unité de chargement (102) de ladite au moins un ouvrage d'art (107) raccordée audit au moins un groupe de translation horizontale (101) et apte au glissement sur celle-ci jusqu'à une position correspondant audit au moins un groupe de translation verticale (103) ;
**caractérisé en ce que** ledit au moins un groupe de translation verticale (103) comprend des premiers éléments porteurs (103a) fixes verticaux raccordés perpendiculairement audit au moins un groupe de translation horizontale (101) et des seconds éléments porteurs (103b) mobiles verticaux aptes au coulissement vertical le long desdits éléments porteurs (103a) fixes verticaux, lesdits seconds éléments porteurs (103b) mobiles verticaux comprenant au moins un élément d'accouplement (109) conçu pour s'engager dans au moins une fente (107a) positionnée à une extrémité supérieure du bord latéral dudit ouvrage d'art (107).

2. Système de manipulation (100) destiné à la réalisation multisensorielle d'au moins un ouvrage d'art (107) selon la revendication 1, **caractérisé en ce qu'**il comprend au moins une unité de suralimentation (104) de ladite au moins un ouvrage d'art (107) raccordée entre ledit au moins un groupe de translation verticale (103) et une paroi arrière (110) du système de manipulation (100) et positionnée à la hauteur du porte-livre (105) correspondant à ladite position de chargement/déchargement.

3. Système de manipulation (100) destiné à la réalisation multisensorielle d'au moins un ouvrage d'art (107) selon la revendication 2, **caractérisé en ce que** ladite unité de suralimentation (104) comprend au moins une paire d'éléments de guidage (104a) horizontaux et au moins un chariot (116) apte au coulissement entre eux et comprenant au moins une base (116a) sur laquelle un système de piston (111) est monté conçu pour pousser horizontalement l'ouvrage d'art (107) sur ledit porte-livre (105).

4. Système de manipulation (100) destiné à la réalisation multisensorielle d'au moins un ouvrage d'art (107) selon la revendication 1, **caractérisé en ce que** ledit au moins un groupe de translation horizontale (101) comprend au moins une paire d'éléments (101a) horizontaux équipés intérieurement de rails (101b) et d'au moins un chariot (106) apte au coulissement entre les rails (101b).

5. Système de manipulation (100) destiné à la réalisation multisensorielle d'au moins un ouvrage d'art (107) selon la revendication 4, **caractérisé en ce que** ledit au moins un chariot (106) comprend au moins une base (106a) comportant au moins un évidement (106b).

6. Système de manipulation (100) destiné à la réalisation multisensorielle d'au moins un ouvrage d'art (107) selon les revendications 1 et 5, **caractérisé en ce que** ladite au moins une unité de chargement (102) comprend au moins un support de rail pourvu d'au moins un élément porteur (102a) conçu pour loger au moins un ouvrage d'art (107) et pouvant être inséré dans ledit au moins un évidement (106b), ledit au moins un support de rail étant apte au coulissement intégral avec ledit chariot (106) le long desdits rails (101b).

7. Système de manipulation (100) destiné à la réalisation multisensorielle d'au moins un ouvrage d'art (107) selon l'une quelconque des revendications précédentes, **caractérisé en ce qu'**il comprend au moins une commande (108) dédiée conçue pour rendre ledit ouvrage d'art (107) possible à être sélectionné par un utilisateur et pour laisser ladite unité de chargement (102) coulisser sur ledit groupe de translation verticale (101) jusqu'à ladite position de chargement/déchargement, pour soulever ledit ouvrage (107) dudit groupe de translation verticale (103) jusqu'à la hauteur du porte-livre (105) et pour actionner le groupe de suralimentation (104) jusqu'au positionnement de l'ouvrage (107) sur les guides (112) du porte-livre (105).

8. Système de manipulation (100) destiné à la réalisation multisensorielle d'au moins un ouvrage d'art (107) selon l'une quelconque des revendications précédentes, **caractérisé en ce qu'**il comprend au moins un dispositif du type :
un appareil de lecture de son ;
un appareil olfactif ;
un dispositif de reproduction visuelle des images et/ou des vidéos pouvant être commandé par un processeur électronique ;
des capteurs d'activation de la lecture de son, de la reproduction vidéo et/ou de la reproduction des stimuli olfactifs.

9. Système destiné à la réalisation d'au moins un ouvrage d'art (107) comprenant le système de manipulation (100) selon l'une quelconque des revendications 1 à 8, un ouvrage d'art (107) à afficher et des capteurs aptes à l'activation des dispositifs de sortie émettant un signal acoustique, thermique, vibratoire, visuel ou olfactif.
